# EUROPEAN PATENT SPECIFICATION

(11) **EP 3 718 984 B1**
(45) Date of publication and mention of the grant of the patent: **09.02.2022**
(21) Application number: 17934727.3
(22) Date of filing: 25.12.2017
(51) Int. Cl.: B01D 53/72, C04B 28/14, C04B 14/04

(54) **GYPSUM BOARD FOR CLEANING FORMALDEHYDE AND PREPARATION METHOD THEREFOR**
GIPSPLATTE ZUR REINIGUNG VON FORMALDEHYD UND HERSTELLUNGSVERFAHREN DAFÜR
PLAQUE DE PLÂTRE POUR LE NETTOYAGE DE FORMALDÉHYDE ET SON PROCÉDÉ DE PRÉPARATION

(30) Priority: 15.12.2017 CN 201711346461
(43) Date of publication of application: 07.10.2020
(73) Proprietor: Beijing New Building Materials Public Limited Company, Beijing 102209 (CN)
(72) Inventor: CHEN, Hongxia, Beijing 102209 (CN); WU, Fade, Beijing 102209 (CN); ZHOU, Jianzhong, Beijing 102209 (CN); WANG, Xia, Beijing 102209 (CN); LI, Fan, Beijing 102209 (CN); RAN, Xiuyun, Beijing 102209 (CN)
(74) Representative: Murgitroyd & Company
(86) International application number: PCT/CN2017/118218
(87) International publication number: WO 2019/114028

(56) References cited:
- EP-A1- 1 685 855
- WO-A1-2004/053254
- CN-A- 101 045 847
- CN-A- 101 235 668
- CN-A- 101 244 362
- CN-A- 104 402 347
- CN-A- 105 567 037

## Description

The present application claims priority to Chinese Patent Application No. 201711346461.4, filed with the Chinese Patent Office on December 15, 2017 and entitled "Gypsum Board for Eliminating Formaldehyde and Preparation Method therefor".

### Technical Field

The present invention relates to the field of building materials, in particular to a gypsum board for eliminating formaldehyde and a preparation method therefor.

### Background

With the emphasis on environmental protection and health, the demand for functional gypsum boards is increasing. During the decoration process, formaldehyde often appears no matter in some coatings or some other processes in the later period. Formaldehyde has become one of the main pollutants in decorations of our country. Formaldehyde is the most harmful to the human body and has the longest incubation period. It is known as the "first killer of indoor pollution". Formaldehyde is the main cause of neonatal deformity, childhood leukemia, and adolescents' memory and mental decline. It has been identified by WHO (World Health Organization) as "Carcinogenic and teratogenic substances". Long-term exposure to low-dose formaldehyde can cause chronic poisoning and cause diseases of the respiratory system, nervous system, reproductive system, or the like. Therefore, the harm of formaldehyde to humans cannot be ignored. Since the formaldehyde release cycle is 3-15 years in artificial wood-based board, a gypsum board for eliminating formaldehyde needs to achieve a long-term and effective formaldehyde-eliminating effect.

The existing gypsum boards for eliminating formaldehyde rely only on the adsorption substance, which is not stable for the adsorption of formaldehyde. There is no obvious target for physical adsorption, many components in indoor air will compete with formaldehyde for adsorption, and there is also the problem of adsorption saturation. Weak adsorption may cause formaldehyde to be released, and the effect is difficult to be guaranteed. The degradation of formaldehyde by adding a photocatalyst to a gypsum board requires more external conditions, for example, ultraviolet light is required to stimulate the catalytic activity, and indoor humidity is also required. Therefore, in actual applications, the formaldehyde-eliminating effect of a gypsum board is difficult to be guaranteed.

Document CN 101 244 362 A discloses a gypsum board which is capable of adsorbing and eliminating formaldehyde with a formaldehyde elimination agent. The formaldehyde elimination agent contains the following weight ratios of raw materials: 500-650 parts of a dispersion medium, 20-160 parts of an acid compound, 100-400 parts of a polyamine compound, 10-80 parts of a salt compound (e.g. a phosphate), 5-20 parts of polyvinyl alcohol, and 0.1-5 parts of acetyl ethyl acetate.

Therefore, there is a need for a gypsum board for eliminating formaldehyde that can perform long-term and effective elimination of indoor formaldehyde and have the mechanical properties of the gypsum board itself unaffected.

### Summary

The present invention aims to provide a gypsum board for eliminating formaldehyde. By addition of a certain content of a mixture of modified zeolite, methoxylamine hydrochloride, polymeric amines, guar gum, and phosphate salt to the formula, the gypsum board can quickly capture, adsorb and decompose formaldehyde. Thus, the gypsum board for eliminating formaldehyde effectively reduces the indoor formaldehyde concentration, maintains a formaldehyde-eliminating effect for a long term, while also has excellent mechanical properties.

Provided is a gypsum board for eliminating formaldehyde including a mixture of modified zeolite, methoxylamine hydrochloride, polymeric amines, guar gum, and phosphate salt; wherein the mixture is prepared by the following method:
adding the modified zeolite to 10-150 parts by weight of an organic solvent, stirring and heating to 45-60 °C; adding the polymeric amines, ultrasonically vibrating for 20-40 min, and spin-drying the organic solvent to obtain a mixed powder; and adding the mixed powder, methoxylamine hydrochloride, guar gum, and phosphate salt to 15-20 parts by weight of water, adjusting pH between 7.5-8.5, stirring for 10-20 minutes, and drying under vacuum to obtain the mixture.

For 100 parts by weight of gypsum, parts by weight of each of the components in the mixture are as follow:

| | |
|---|---|
| modified zeolite | 1-10 parts by weight; |
| methoxylamine hydrochloride | 0.1-8 parts by weight; |
| polymeric amines | 0.01-2 parts by weight; |
| guar gum | 0.05-2 parts by weight; |
| phosphate salt | 0.01-0.5 parts by weight. |

For 100 parts by weight of gypsum, parts by weight of each of the components in the mixture are as follow:

| | |
|---|---|
| modified zeolite | 4-8 parts by weight; |
| methoxylamine hydrochloride | 0.5-2 parts by weight; |
| polymeric amines | 0.05-1.5 parts by weight; |
| guar gum | 0.05-2 parts by weight; |
| phosphate salt | 0.01-0.5 parts by weight. |

A preparation method of the modified zeolite includes steps of:
soaking natural zeolite in a calcium chloride solution having a concentration of 20% for 20-24 h, and filtering; burning at 400-450 °C for 1-1.5 h, and cooling; placing 10 g of the treated zeolite into a 250 ml beaker, adding 100 ml deionized water and 50 ml alkyldimethylbenzyl ammonium salt solution having a concentration of 10 mmol/L, and magnetically stirring for 3-5 h; and washing the zeolite with deionized water and then air-drying the zeolite to obtain the modified zeolite.

The gypsum board further includes the following components, for 100 parts by weight of gypsum, parts by weight of each of the components are as follow:

| | |
|---|---|
| modified starch | 0.02-1 part by weight; |
| foaming agent | 0.05-1 part by weight; |
| water | 70-85 parts by weight. |

The polymeric amines are hyperbranched polyamides.

The organic solvent is ethyl acetate or ethanol.

The gypsum board includes the following components, parts by weight of each of the components are as follow:

| | |
|---|---|
| gypsum | 100 parts by weight; |
| modified zeolite | 4 parts by weight; |
| methoxylamine hydrochloride | 0.5 parts by weight; |
| polymeric amines | 0.5 parts by weight; |
| guar gum | 0.5 parts by weight; |
| phosphate salt | 0.15 parts by weight; |
| modified starch | 0.4 parts by weight; |
| foaming agent | 0.15 parts by weight; |
| water | 78 parts by weight. |

The gypsum board includes the following components, parts by weight of each of the components are as follow:

| | |
|---|---|
| gypsum | 100 parts by weight; |
| modified zeolite | 6 parts by weight; |
| methoxylamine hydrochloride | 1.5 parts by weight; |
| polymeric amines | 1.5 parts by weight; |
| guar gum | 0.8 part by weight; |
| phosphate salt | 0.1 part by weight; |
| modified starch | 0.8 part by weight; |
| foaming agent | 0.45 part by weight; |
| water | 80 parts by weight. |

According to another aspect of the present invention, provided is a preparation method for a gypsum board for eliminating formaldehyde, including steps of:
mechanically stirring predetermined parts by weight of gypsum and modified starch, and a mixture obtained by mixing predetermined parts by weight of modified zeolite, methoxylamine hydrochloride, polymeric amines, guar gum, and phosphate salt, to obtain a uniform solid powder, and feeding into a mixer;
adding a predetermined part by weight of a foaming agent to water, and feeding the mixed solution into the mixer after being foamed by a foaming system; thoroughly stirring raw materials by the mixer to obtain a uniform slurry, continuously pouring between cover papers, and extrusion molding to obtain a wet gypsum board; and solidifying, cutting, drying and sawing the wet gypsum board to obtain the gypsum board for eliminating formaldehyde.

In the present invention, a gypsum board for eliminating formaldehyde includes a mixture of modified zeolite, methoxylamine hydrochloride, polymeric amines, guar gum, and phosphate salt, which is mixed by the following method: adding the modified zeolite to 10-150 parts by weight of ethyl acetate or ethanol, stirring and heating to 45-60 °C; adding the polymeric amines, ultrasonically vibrating for 20-40 min, and spin-drying the solvent to obtain a mixed powder; and adding the mixed powder, methoxylamine hydrochloride, guar gum, and phosphate salt to 15-20 parts by weight of water, adjusting pH between 7.5-8.5, stirring for 10-20 minutes, and drying under vacuum to obtain the mixture.

For the gypsum board for eliminating formaldehyde, usually, that a compound reacted with formaldehyde is directly added into a gypsum slurry or gypsum powder will greatly reduce the formaldehyde-eliminating effect, due to the limitation of its use position and the limitation of the use condition (methoxylamine hydrochloride and polymeric amines cannot exist in a form of a solution in a gypsum board).

In the present invention, the modified zeolite is dissolved in ethyl acetate or ethanol, heated to a certain temperature, added with the polymeric amines, ultrasonically vibrated, and then spindyied, which makes the polymeric amines combine well with the modified zeolite, and the binding force is strong; the mixed powder, methoxylamine hydrochloride, guar gum, and phosphate salt are added to the water, according to the actual situation, added with sodium dihydrogen phosphate salt or sodium bicarbonate to adjust pH between 7.5-8.5, then stirred for 10-20 min after the guar gum and phosphate salt are added, and dried under vacuum. Within this pH range, the formaldehyde-eliminating effect is significantly improved. The prepared mixture needs to be used in combination with guar gum. The addition of a small amount of guar gum can further improve the binding force of methoxylamine hydrochloride, polymeric amines and modified zeolite, and avoid the separation of methoxylamine hydrochloride, polymeric amines and modified zeolites during the preparation of gypsum slurry, thereby affecting the formaldehyde adsorption and removal effect. The addition of phosphate salt helps the mixture to be evenly dispersed in the gypsum slurry, which can make the prepared gypsum board have a uniform formaldehyde removal effect. There is no special limitation on phosphate salt, and conventional phosphate salt can be used. When the mixture is added to the gypsum slurry as a whole, it can not only quickly degrade formaldehyde in a short time, but also maintain the effect for decades.

Natural zeolite itself is a crystal of porous hydrous silicate with a framework structure, and its porous structure makes it have relatively good ion exchange and adsorption performance. However, the adsorption of natural zeolite itself has a limited capacity and is prone to saturation soon. Moreover, and the adsorption is not targeted at formaldehyde, and formaldehyde and water or other organic matter are often adsorbed at the same time. Therefore, in the present invention, natural zeolite is modified by soaking natural zeolite in a calcium chloride solution having a concentration of 20% for 20-24 h, and filtering; burning at 400-450 °C for 1-1.5 h, and cooling; placing 10 g of the treated zeolite into a 250 ml beaker, adding 100 ml deionized water and 50 ml alkyldimethylbenzyl ammonium salt solution having a concentration of 10 mmol/L, and magnetically stirring for 3-5 h; and washing the zeolite with deionized water and then air-drying the zeolite to obtain the modified zeolite.

After the natural zeolite is modified by the modification method of the present invention, the adsorption is more targeted, the indoor formaldehyde can be actively adsorbed, and the adsorption efficiency is improved, and the formaldehyde adsorption capacity of the modified zeolite is greatly increased compared with that before the modification.

Treated methoxylamine hydrochloride and polymeric amines can react with formaldehyde quickly, and can effectively degrade the formaldehyde adsorbed by the modified zeolite, thereby guaranteeing a long-term formaldehyde-eliminating effect of the gypsum board for eliminating formaldehyde. It is found through experiments that the combination of methoxylamine hydrochloride, polymeric amines, and modified zeolite in the preferred range can make the gypsum board for eliminating formaldehyde have an excellent formaldehyde-eliminating effect, and also guarantee that the mechanical properties of the gypsum board for eliminating formaldehyde reach optimal values.

A preparation method for the gypsum board for eliminating formaldehyde mainly includes steps of:
mechanically stirring predetermined parts by weight of gypsum and modified starch, and a mixture obtained by mixing predetermined parts by weight of modified zeolite, methoxylamine hydrochloride, polymeric amines, guar gum, and phosphate salt, to obtain a uniform solid powder, and feeding into a mixer; and
adding a predetermined part by weight of a foaming agent to water, and feeding the mixed solution into the mixer after being foamed by a foaming system; thoroughly stirring raw materials by the mixer to obtain a uniform slurry, continuously pouring between cover papers, and extrusion molding to obtain a wet gypsum board; and solidifying, cutting, drying and sawing the wet gypsum board to obtain the gypsum board for eliminating formaldehyde.

The gypsum board for eliminating formaldehyde adopting the technical scheme of the present invention is obviously superior to the prior art products in terms of the long-term formaldehyde-eliminating effect and mechanical properties.

### Detailed Description

To make the objectives, technical solutions, and advantages of examples of the present invention more comprehensible, the following clearly and completely describes the technical solutions in the present invention with reference to examples of the present invention. Apparently, the described examples are merely a part rather than all of the examples of the present invention. It should be noted that the following examples of the present application and the features of the examples may randomly combine with each other without no confliction.

A gypsum board for eliminating formaldehyde of the present invention includes, based on 100 parts by weight of gypsum, 1-10 parts by weight of modified zeolite, 0.1-8 parts by weight of methoxylamine hydrochloride, 0.01-2 parts by weight of polymeric amines, 0.05-2 parts by weight of guar gum, and 0.01-0.5 part by weight of phosphate salt.

A preparation method of the mixture includes: adding the modified zeolite to 10-150 parts by weight of ethyl acetate or ethanol, stirring and heating to 45-60 °C; adding the polymeric amines, ultrasonically vibrating for 20-40 min, and spin-drying the solvent to obtain a mixed powder; and adding the mixed powder, methoxylamine hydrochloride, guar gum, and phosphate salt to 15-20 parts by weight of water, adjusting pH between 7.5-8.5, stirring for 10-20 minutes, and drying under vacuum to obtain the mixture.

The modified zeolite is prepared by soaking natural zeolite in a calcium chloride solution having a concentration of 20% for 24 hours, and filtering; burning at 430 °C for 1.5 h, and cooling; placing 10 g of the treated zeolite into a 250ml beaker, adding 100 ml deionized water and 50 ml alkyldimethylbenzyl ammonium salt solution having a concentration of 10 mmol/L, and magnetically stirring for 3-5 h; and washing the zeolite with deionized water and air-drying the zeolite.

The gypsum board for eliminating formaldehyde further includes 0.02-1 part by weight of modified starch, 0.05-1 part by weight of foaming agent, and 70-85 parts by weight of water.

Specific Examples of the components and their contents of the gypsum board for eliminating formaldehyde are listed below.

### Example

A gypsum board for eliminating formaldehyde was prepared by: mechanically stirring 100 parts by weight of gypsum, 0.02-1 part by weight of modified starch, and a mixture obtained by mixing 1-10 parts by weight of modified zeolite, 0.1-8 parts by weight of methoxylamine hydrochloride, 0.01-2 parts by weight of polymeric amines, 0.05-2 parts by weight of guar gum, and 0.01-0.5 part by weight of phosphate salt to obtain a uniform solid powder, and feeding into a mixer; adding 0.05-1 part by weight of a foaming agent to water, and feeding the mixed solution into the mixer after being foamed by a foaming system; thoroughly stirring raw materials by the mixer to obtain a uniform slurry, continuously pouring between cover papers, and extrusion molding to obtain a wet gypsum board; and solidifying, cutting, drying and sawing the wet gypsum board to obtain the gypsum board for eliminating formaldehyde.

Table 1 lists some example data of the present invention. It should be noted that the data in Table 1 are part of the data selected during the experimental process, and the Examples of the present invention are not limited to the following data.

**Table 1 Example of Formulas of Gypsum Board for eliminating Formaldehyde**

| | Example 1 | Example 2 | Example 3 | Example 4 | Example 5 | Example 6 | Example 7 |
|---|---|---|---|---|---|---|---|
| Gypsum | 100 | 100 | 100 | 100 | 100 | 100 | 100 |
| Modified Zeolite | 1 | 3 | 4 | 4.5 | 6 | 8 | 10 |
| Methoxylamine Hydrochloride | 0.1 | 3.5 | 0.5 | 1 | 1.5 | 2 | 8 |
| Polymeric Amines | 0.01 | 0.05 | 0.5 | 0.2 | 1.5 | 1 | 2 |
| Guar Gum | 0.05 | 0.2 | 0.5 | 1.2 | 0.8 | 1.6 | 2 |
| Phosphate salt | 0.01 | 0.05 | 0.15 | 0.3 | 0.1 | 0.4 | 0.5 |
| Modified Starch | 0.02 | 0.5 | 0.4 | 0.6 | 0.8 | 0.4 | 1 |
| Foaming Agent | 0.05 | 0.2 | 0.15 | 0.3 | 0.45 | 0.5 | 1 |
| Water | 70 | 80 | 78 | 75 | 80 | 80 | 85 |

### Test

### Test 1

Comparative tests are performed on the ability of adsorption materials such as modified zeolite, natural zeolite, and activated carbon to adsorb formaldehyde. Natural zeolite, activated carbon, and diatomaceous earth are all commercially available products. Formaldehyde is previously dropped into a 1 m³ closed chamber, in which the initial formaldehyde concentration is measured to be 20 mg/m³, 100 g of activated carbon, diatomaceous earth, natural zeolite, and modified zeolite is separately placed, the change of formaldehyde concentration in the chamber is separately detected over time. The specific data are shown in Table 2. The data unit in Table 2 is mg/m³.

**Table 2 Formaldehyde Adsorption of each of Adsorption Materials**

| | 1h | 2h | 4h | 12h | 24h |
|---|---|---|---|---|---|
| Activated Carbon | 19.72 | 19.55 | 19.35 | 18.98 | 19.00 |
| Diatomaceous Earth | 19.90 | 19.83 | 19.75 | 19.76 | 19.76 |
| Natural Zeolite | 19.25 | 18.02 | 17.86 | 17.5 | 17.25 |
| Modified Zeolite | 18.15 | 16.50 | 14.24 | 12.10 | 10.98 |

From the data in Table 2, it can be seen that adsorption capacity of activated carbon and diatomaceous earth to formaldehyde is relatively small, and the adsorption saturation state is reached soon (activated carbon 12 h, diatomaceous earth 10 h); natural zeolite, compared with activated carbon and diatomaceous earth, has a larger adsorption capacity, but has slower decreasing rate of formaldehyde concentration overtime, and the adsorption tends to be saturated; while the zeolite modified by the modification method of the present invention, no matter in terms of the adsorption rate and adsorption capacity, is much better than other adsorption materials and has an excellent adsorption effect.

### Test 2

The following is a test analysis of the formaldehyde-eliminating effect of a gypsum board for eliminating formaldehyde in each Example. In a 1 m³ chamber, the addition amount of formaldehyde is 3 µL. Formaldehyde is continuously dropped each day, and a 9.5 mm thick gypsum board with the length and width of 0.5 m is placed. The formaldehyde concentration in the chamber within 1-10 days is separately measured. The specific data are shown in Table 3. The data unit in Table 3 is mg/m³.

**Table 3 Formaldehyde-Eliminating Effect of Gypsum Board in Each Example**

| | 1d | 2d | 3d | 4d | 6d | 8d | 10d |
|---|---|---|---|---|---|---|---|
| Blank Test | 0.59 | 0.58 | 0.57 | 0.57 | 0.56 | 0.55 | 0.58 |
| Example 1 | 0.09 | 0.08 | 0.07 | 0.09 | 0.08 | 0.08 | 0.09 |
| Example 2 | 0.07 | 0.06 | 0.05 | 0.06 | 0.07 | 0.05 | 0.06 |
| Example 3 | 0.02 | 0.03 | 0.02 | 0.01 | 0.02 | 0.01 | 0.02 |
| Example 4 | 0.05 | 0.06 | 0.07 | 0.06 | 0.07 | 0.08 | 0.07 |
| Example 5 | 0.01 | 0.02 | 0.03 | 0.01 | 0.02 | 0.03 | 0.02 |
| Example 6 | 0.05 | 0.05 | 0.06 | 0.07 | 0.06 | 0.08 | 0.07 |
| Example 7 | 0.03 | 0.04 | 0.05 | 0.05 | 0.03 | 0.04 | 0.04 |

From the data in Table 3, it can be seen that the gypsum board for eliminating formaldehyde in each Example can quickly absorb and degrade the indoor formaldehyde within 1 day, and the 24 hours efficiency rate is as high as 90% or more, and preferably more than 96% in Examples 3 and 5.

### Test 3

At the same time, the mechanical properties of the gypsum board (9.5 mm) for eliminating formaldehyde of the present invention are also tested. Mechanical properties of a gypsum board for eliminating formaldehyde after the initial preparation are tested, and mechanical properties of the gypsum board having eliminate formaldehyde for 10 days are also tested. Data of the initial mechanical properties are shown in Table 4 (referring to the standard GB/T9775-2008).

**Table 4 Mechanical Properties of Gypsum Board in Each Example**

| Average breaking load /N | Example 1 | Example 2 | Example 3 | Example 4 | Example 5 | Example 6 | Example 7 |
|---|---|---|---|---|---|---|---|
| Perpendicular to length | 418.8 | 425.5 | 445.7 | 436.8 | 450.5 | 430.6 | 426.1 |
| Parallel to length | 182.8 | 190.6 | 205.5 | 198.9 | 209.8 | 196.3 | 195.8 |

It can be seen that with the increase of the content of each component such as modified zeolite, methoxylamine hydrochloride, etc., the mechanical properties of the gypsum board for eliminating formaldehyde decrease (Examples 6 and 7); although the gypsum board for eliminating formaldehyde of Example 1 can meet the need of eliminating formaldehyde, its mechanical properties are low, which can also explain that modified zeolite, methoxylamine hydrochloride, and polymeric amines in a specific content range have a setting retarding effect on the gypsum, thereby improving the mechanical properties of the gypsum board for eliminating formaldehyde. Comprehensively considering the mechanical properties, production costs, formaldehyde-eliminating effect, and other factors, Examples 3 and 5 are the optimal solutions where formaldehyde can be degraded continuously.

A gypsum board for eliminating formaldehyde using the formula composition of the present invention has excellent mechanical properties which are obviously better than those of a gypsum board for eliminating formaldehyde in the prior art. From a comparative test on eliminating formaldehyde for 10 days, it is found that the gypsum board for eliminating formaldehyde of the present invention has the mechanical properties unaffected after eliminating formaldehyde for a long time.

In summary, a gypsum board for eliminating formaldehyde of the present invention, by addition of a certain content of a mixture of modified zeolite, methoxylamine hydrochloride, and polymeric amines to the formula, makes the gypsum board effectively capture and quickly and effectively adsorb indoor formaldehyde. Then formaldehyde is degraded. Thus, the gypsum board for eliminating formaldehyde effectively reduces the indoor formaldehyde concentration, maintains a formaldehyde-eliminating effect for a long term, while also has excellent mechanical properties, and has the mechanical properties unaffected during a long-term process for eliminating formaldehyde.

Finally, it should be noted that in this application, the terminology "include", "including" or any other variant is intended to cover non-exclusive inclusion, so that a process, a method, an object or a device that includes a series of elements not only includes those elements, but also includes other elements that are not explicitly listed, or includes inherent elements of the process, method, object or device. Without more limitations, an element modified by "include one..." does not exclude that the process, method, object, or device that includes the element includes another identical element.

The foregoing examples are merely intended for describing the technical solutions of the present invention rather than limiting the present invention. Although the present invention is described in detail with reference to the foregoing examples, persons of ordinary skill in the art should understand that they may still make modifications to the technical solutions described in the examples, or make equivalent replacements to some technical features in the technical solutions thereof, without departing from scope of the technical solutions of the examples of the present invention.

### Industrial Applicability

By addition of a certain content of a mixture of modified zeolite, methoxylamine hydrochloride, and polymeric amines to the formula, the gypsum board can effectively capture and quickly and effectively adsorb indoor formaldehyde. Then formaldehyde is degraded. Thus, the gypsum board for eliminating formaldehyde effectively reduces the indoor formaldehyde concentration, maintains a formaldehyde-eliminating effect for a long term, while also has excellent mechanical properties, and has the mechanical properties unaffected during a long-term process for eliminating formaldehyde.

## Claims

1. A gypsum board for eliminating formaldehyde, comprising a mixture of modified zeolite, methoxylamine hydrochloride, polymeric amines, guar gum and phosphate salt; wherein the mixture is prepared by the following method:
adding the modified zeolite to 10-150 parts by weight of an organic solvent, stirring and heating to 45-60 °C; adding the polymeric amines, ultrasonically vibrating for 20-40 min, and spin-drying the organic solvent to obtain a mixed powder; and adding the mixed powder, methoxylamine hydrochloride, guar gum, and phosphate salt to 15-20 parts by weight of water, adjusting pH between 7.5-8.5, stirring for 10-20 minutes, and drying under vacuum to obtain the mixture.

2. The gypsum board for eliminating formaldehyde according to claim 1, wherein, for 100 parts by weight of gypsum, parts by weight of each of the components in the mixture are as follow:
| | |
|---|---|
| modified zeolite | 1-10 parts by weight; |
| methoxylamine hydrochloride | 0.1-8 parts by weight; |
| polymeric amines | 0.01-2 parts by weight; |
| guar gum | 0.05-2 parts by weight; |
| phosphate salt | 0.01-0.5 parts by weight. |

3. The gypsum board for eliminating formaldehyde according to claim 1 or 2, wherein, for 100 parts by weight of gypsum, parts by weight of each of the components in the mixture are as follow:
| | |
|---|---|
| modified zeolite | 4-8 parts by weight; |
| methoxylamine hydrochloride | 0.5-2 parts by weight; |
| polymeric amines | 0.05-1.5 parts by weight; |
| guar gum | 0.05-2 parts by weight; |
| phosphate salt | 0.01-0.5 parts by weight. |

4. The gypsum board for eliminating formaldehyde according to claim 3, wherein, a preparation method of the modified zeolite comprises steps of:
soaking natural zeolite in a calcium chloride solution having a concentration of 20% for 20-24 h, and filtering; burning at 400-450 °C for 1-1.5 h, and cooling; placing 10 g of the treated natural zeolite into a 250 ml beaker, adding 100 ml deionized water and 50 ml alkyldimethylbenzyl ammonium salt solution having a concentration of 10 mmol/L, and magnetically stirring for 3-5 h; and washing the treated natural zeolite with deionized water and then air-drying the treated natural zeolite to obtain the modified zeolite.

5. The gypsum board for eliminating formaldehyde according to claim 2, further comprising the following components, wherein, for 100 parts by weight of gypsum, parts by weight of each of the components are as follow:
| | |
|---|---|
| modified starch | 0.02-1 part by weight; |
| foaming agent | 0.05-1 part by weight; |
| water | 70-85 parts by weight. |

6. The gypsum board for eliminating formaldehyde according to claim 1, wherein the polymeric amines are hyperbranched polyamides.

7. The gypsum board for eliminating formaldehyde according to claim 1, wherein the organic solvent is ethyl acetate or ethanol.

8. The gypsum board for eliminating formaldehyde according to claim 5, comprising the following components, wherein parts by weight of each of the components are as follow:
| | |
|---|---|
| gypsum | 100 parts by weight; |
| modified zeolite | 4 parts by weight; |
| methoxylamine hydrochloride | 0.5 parts by weight; |
| polymeric amines | 0.5 parts by weight; |
| guar gum | 0.5 parts by weight; |
| phosphate salt | 0.15 parts by weight; |
| modified starch | 0.4 parts by weight; |
| foaming agent | 0.15 parts by weight; |
| water | 78 parts by weight. |

9. The gypsum board for eliminating formaldehyde according to claim 5, comprising the following components, wherein parts by weight of each of the components are as follow:
| | |
|---|---|
| gypsum | 100 parts by weight; |
| modified zeolite | 6 parts by weight; |
| methoxylamine hydrochloride | 1.5 parts by weight; |
| polymeric amines | 1.5 parts by weight; |
| guar gum | 0.8 part by weight; |
| phosphate salt | 0.1 part by weight; |
| modified starch | 0.8 part by weight; |
| foaming agent | 0.45 part by weight; |
| water | 80 parts by weight. |

## Patentansprüche

1. Eine Gipsplatte zur Eliminierung von Formaldehyd, beinhaltend eine Mischung aus modifiziertem Zeolith, Methoxylaminhydrochlorid, polymeren Aminen, Guarkernmehl und Phosphatsalz; wobei die Mischung nach dem folgenden Verfahren hergestellt wird: Hinzufügen des modifizierten Zeoliths zu 10-150 Gewichtsteilen eines organischen Lösungsmittels, Rühren und Erhitzen auf 45-60 °C; Hinzufügen der polymeren Amine, Ultraschallvibrieren für 20-40 min und Trockenschleudern des organischen Lösungsmittels, um ein gemischtes Pulver zu erhalten; und Hinzufügen des gemischten Pulvers, des Methoxylaminhydrochlorids, des Guarkernmehls und des Phosphatsalzes zu 15-20 Gewichtsteilen Wasser, Einstellen des pH-Werts auf zwischen 7,5-8,5, Rühren für 10-20 Minuten und Trocknen unter Vakuum, um die Mischung zu erhalten.

2. Gipsplatte zur Eliminierung von Formaldehyd gemäß Anspruch 1, wobei auf 100 Gewichtsteile Gips die Gewichtsteile jeder der Komponenten in der Mischung wie folgt sind:
| | |
|---|---|
| modifizierter Zeolith | 1-10 Gewichtsteile; |
| Methoxylaminhydrochlorid | 0,1-8 Gewichtsteile; |
| polymere Amine | 0,01-2 Gewichtsteile; |
| Guarkernmehl | 0,05-2 Gewichtsteile; |
| Phosphatsalz | 0,01-0,5 Gewichtsteile |

3. Gipsplatte zur Eliminierung von Formaldehyd gemäß Anspruch 1 oder 2, wobei auf 100 Gewichtsteile Gips die Gewichtsteile jeder der Komponenten in der Mischung wie folgt sind:
| | |
|---|---|
| modifizierter Zeolith | 4-8 Gewichtsteile; |
| Methoxylaminhydrochlorid | 0,5-2 Gewichtsteile; |
| polymere Amine | 0,05-1,5 Gewichtsteile; |
| Guarkernmehl | 0,05-2 Gewichtsteile; |
| Phosphatsalz | 0,01-0,5 Gewichtsteile. |

4. Gipsplatte zur Eliminierung von Formaldehyd gemäß Anspruch 3, wobei ein Herstellungsverfahren des modifizierten Zeoliths die folgenden Schritte beinhaltet: Einweichen von natürlichem Zeolith in einer Calciumchloridlösung mit einer Konzentration von 20 % für 20-24 h und Filtrieren; Brennen bei 400-450 °C für 1-1,5 h und Abkühlen; Platzieren von 10 g des behandelten natürlichen Zeoliths in einen 250-ml-Becher, Hinzufügen von 100 ml entionisiertem Wasser und 50 ml Alkyldimethylbenzylammoniumsalzlösung mit einer Konzentration von 10 mmol/L und magnetisches Rühren für 3-5 h; und Waschen des behandelten natürlichen Zeoliths mit entionisiertem Wasser und anschließend Lufttrocknen des behandelten natürlichen Zeoliths, um den modifizierten Zeolithen zu erhalten.

5. Gipsplatte zur Eliminierung von Formaldehyd gemäß Anspruch 2, ferner beinhaltend die folgenden Komponenten, wobei auf 100 Gewichtsteile Gips die Gewichtsteile jeder der Komponenten wie folgt sind:
| | |
|---|---|
| modifizierte Stärke | 0,02-1 Gewichtsteile; |
| Schaumbildner | 0,05-1 Gewichtsteile; |
| Wasser | 70-85 Gewichtsteile. |

6. Gipsplatte zur Eliminierung von Formaldehyd gemäß Anspruch 1, wobei die polymeren Amine hyperverzweigte Polyamide sind.

7. Gipsplatte zur Eliminierung von Formaldehyd gemäß Anspruch 1, wobei das organische Lösungsmittel Ethylacetat oder Ethanol ist.

8. Gipsplatte zur Eliminierung von Formaldehyd gemäß Anspruch 5, beinhaltend die folgenden Komponenten, wobei die Gewichtsteile jeder der Komponenten wie folgt sind:
| | |
|---|---|
| Gips | 100 Gewichtsteile; |
| modifizierter Zeolith | 4 Gewichtsteile; |
| Methoxylaminhydrochlorid | 0,5 Gewichtsteile; |
| polymere Amine | 0,5 Gewichtsteile; |
| Guarkernmehl | 0,5 Gewichtsteile; |
| Phosphatsalz | 0,15 Gewichtsteile; |
| modifizierte Stärke | 0,4 Gewichtsteile; |
| Schaumbildner | 0,15 Gewichtsteile; |
| Wasser | 78 Gewichtsteile. |

9. Gipsplatte zur Eliminierung von Formaldehyd gemäß Anspruch 5, beinhaltend die folgenden Komponenten, wobei die Gewichtsteile jeder der Komponenten wie folgt sind:
| | |
|---|---|
| Gips | 100 Gewichtsteile; |
| modifizierter Zeolith | 6 Gewichtsteile; |
| Methoxylaminhydrochlorid | 1,5 Gewichtsteile; |
| polymere Amine | 1,5 Gewichtsteile; |
| Guarkernmehl | 0,8 Gewichtsteile; |
| | |
|---|---|
| Phosphatsalz | 0,1 Gewichtsteile; |
| modifizierte Stärke | 0,8 Gewichtsteile; |
| Schaumbildner | 0,45 Gewichtsteile; |
| Wasser | 80 Gewichtsteile. |

## Revendications

1. Une plaque de plâtre pour éliminer le formaldéhyde, comprenant un mélange de zéolithe modifiée, de chlorhydrate de méthoxylamine, d'amines polymères, de gomme de guar et de sel de phosphate ; où le mélange est préparé par le procédé suivant : le fait d'ajouter la zéolithe modifiée à de 10 à 150 parties en poids d'un solvant organique, le fait d'agiter et de chauffer à de 45 à 60 °C ; le fait d'ajouter les amines polymères, le fait de faire vibrer ultrasoniquement pendant de 20 à 40 min, et le fait de faire sécher par centrifugation le solvant organique afin d'obtenir une poudre mélangée ; et le fait d'ajouter la poudre mélangée, le chlorhydrate de méthoxylamine, la gomme de guar, et le sel de phosphate à de 15 à 20 parties en poids d'eau, le fait d'ajuster le pH entre 7,5 et 8,5, le fait d'agiter pendant de 10 à 20 minutes, et le fait de faire sécher sous vide afin d'obtenir le mélange.

2. La plaque de plâtre pour éliminer le formaldéhyde selon la revendication 1, où, pour 100 parties en poids de plâtre, les parties en poids de chacun des composants dans le mélange sont comme suit :
| | |
|---|---|
| zéolithe modifiée | 1 à 10 parties en poids ; |
| chlorhydrate de méthoxylamine | 0,1 à 8 parties en poids ; |
| amines polymères | 0,01 à 2 parties en poids ; |
| gomme de guar | 0,05 à 2 parties en poids ; |
| sel de phosphate | 0,01 à 0,5 partie en poids. |

3. La plaque de plâtre pour éliminer le formaldéhyde selon la revendication 1 ou la revendication 2, où, pour 100 parties en poids de plâtre, les parties en poids de chacun des composants dans le mélange sont comme suit :
| | |
|---|---|
| zéolithe modifiée | 4 à 8 parties en poids ; |
| chlorhydrate de méthoxylamine | 0,5 à 2 parties en poids ; |
| amines polymères | 0,05 à 1,5 partie en poids ; |
| gomme de guar | 0,05 à 2 parties en poids ; |
| sel de phosphate | 0,01 à 0,5 partie en poids. |

4. La plaque de plâtre pour éliminer le formaldéhyde selon la revendication 3, où, un procédé de préparation de la zéolithe modifiée comprend les étapes consistant :
à tremper la zéolithe naturelle dans une solution de chlorure de calcium ayant une concentration de 20 % pendant de 20 à 24 h, et à filtrer ; à brûler à de 400 à 450 °C pendant de 1 à 1,5 h, et à refroidir ; à placer 10 g de la zéolithe naturelle traitée dans un bécher de 250 ml, à ajouter 100 ml d'eau déminéralisée et 50 ml de solution de sel d'alkyldiméthylbenzyl ammonium ayant une concentration de 10 mmol/L, et à agiter magnétiquement pendant de 3 à 5 h ; et à laver la zéolithe naturelle traitée avec de l'eau déminéralisée puis à faire sécher à l'air la zéolithe naturelle traitée afin d'obtenir la zéolithe modifiée.

5. La plaque de plâtre pour éliminer le formaldéhyde selon la revendication 2, comprenant en outre les composants suivants, où, pour 100 parties en poids de plâtre, les parties en poids de chacun des composants sont comme suit :
| | |
|---|---|
| amidon modifié | 0,02 à 1 partie en poids ; |
| agent moussant | 0,05 à 1 partie en poids ; |
| eau | 70 à 85 parties en poids. |

6. La plaque de plâtre pour éliminer le formaldéhyde selon la revendication 1, où les amines polymères sont des polyamides hyperramifiés.

7. La plaque de plâtre pour éliminer le formaldéhyde selon la revendication 1, où le solvant organique est l'acétate d'éthyle ou l'éthanol.

8. La plaque de plâtre pour éliminer le formaldéhyde selon la revendication 5, comprenant les composants suivants, où les parties en poids de chacun des composants sont comme suit :
| | |
|---|---|
| plâtre | 100 parties en poids ; |
| zéolithe modifiée | 4 parties en poids ; |
| chlorhydrate de méthoxylamine | 0,5 partie en poids ; |
| amines polymères | 0,5 partie en poids ; |
| gomme de guar | 0,5 partie en poids ; |
| sel de phosphate | 0,15 partie en poids ; |
| amidon modifié | 0,4 partie en poids ; |
| agent moussant | 0,15 partie en poids ; |
| eau | 78 parties en poids. |

9. La plaque de plâtre pour éliminer le formaldéhyde selon la revendication 5, comprenant les composants suivants, où les parties en poids de chacun des composants sont comme suit:
| | |
|---|---|
| plâtre | 100 parties en poids ; |
| zéolithe modifiée | 6 parties en poids ; |
| chlorhydrate de méthoxylamine | 1,5 partie en poids ; |
| amines polymères | 1,5 partie en poids ; |
| | |
|---|---|
| gomme de guar | 0,8 partie en poids ; |
| sel de phosphate | 0,1 partie en poids ; |
| amidon modifié | 0,8 partie en poids ; |
| agent moussant | 0,45 partie en poids ; |
| eau | 80 parties en poids. |
